# EUROPEAN PATENT APPLICATION

(11) **EP 3 435 239 A1**
(43) Date of publication of application: **30.01.2019**
(21) Application number: 18175434.2
(22) Date of filing: 31.05.2018
(51) Int. Cl.: G06F 12/0804, G06F 12/0868, G06F 13/10, G06F 11/14

(54) **METHODS AND APPARATUS TO MANAGE INTERMITTENTLY CONNECTABLE STORAGE MEDIA**

(30) Priority: 24.07.2017 US 201715658177
(71) Applicant: INTEL Corporation, Santa Clara, CA 95054 (US)
(72) Inventor: BOYD, James A., Hillsboro, OR Oregon 97124 (US); JUENEMANN, Dale J., North Plains, OR Oregon 97133 (US)
(74) Representative: Rummler, Felix

(57) **Abstract**

A disclosed example to manage intermittently connectable storage media includes a cache initializer to initialize a nonvolatile cache corresponding to an intermittently connectable storage media device connected to a host system; a cache flush manager to change a cache flush mode associated with the nonvolatile cache from a cache write through mode to a cache write back mode based on the intermittently connectable storage media device being disconnected from the host system; a cache access manager to maintain the nonvolatile cache after the intermittently connectable storage media device is disconnected, and in response to a data access request corresponding to the intermittently connectable storage media device, perform a corresponding data access operation using the nonvolatile cache.

## Description

### FIELD OF THE DISCLOSURE

The present disclosure relates generally to memory for use with processor systems and, more particularly, to methods and apparatus to manage intermittently connectable storage media.

### BACKGROUND

Processor systems including computers, tablets, mobile devices, Internet appliances, and other computing and/or connected devices are provided with memory to store instructions and/or data. Processor systems may also be used with removable storage media such as universal serial bus (USB) flash drives, secure digital (SD) memory cards, etc. Removable storage media can be used to expand data storage capacities of processor systems and/or to make data physically portable between different devices. Using such removable storage media, storage capacity expansion and data portability is achievable using external memory/accessory interfaces on processor systems such as USB interfaces, memory card interfaces, etc.

To access data on removable storage media, a user plugs the removable storage media device into a corresponding external interface port on a processor system. The processor system detects the connected device and executes a drive/volume mounting process to mount the removable storage media device as an accessible drive/volume in an operating system (OS) environment of the processor system. Subsequently, the user can unmount, eject, or otherwise physically disconnect the removable storage media device from the processor system. At that point, the user expects data to be stored on the removable storage media device in a persistent, non-volatile manner. The user also expects the persisted data to be accessible at a later time using the same or a different processor system.

### BRIEF DESCRIPTION OF THE DRAWINGS

FIG. 1A illustrates an example host system to manage intermittently connectable storage media in accordance with the teachings of this disclosure.
FIG. 1B illustrates another configuration of the example host system of FIG. 1A to manage intermittently connectable storage media in accordance with the teachings of this disclosure.
FIG. 2 illustrates an example of the nonvolatile cache manager of FIGS. 1A and 1B to manage intermittently connectable storage media in accordance with the teachings of this disclosure.
FIG. 3 is a flow diagram representative of example machine readable instructions that may be executed to implement the example nonvolatile cache manager of FIGS. 1A, 1B, and 2 to manage the intermittently connectable storage media of FIGS. 1A and 1B during connecting and reconnecting phases of the removable storage media.
FIG. 4 is a flow diagram representative of example machine readable instructions that may be executed to implement the example nonvolatile cache manager of FIGS. 1A, 1B, and 2 to initialize and maintain the nonvolatile cache of FIGS. 1A and 1B in association with managing the intermittently connectable storage media of FIGS. 1A and 1B.
FIG. 5 is a flow diagram representative of example machine readable instructions that may be executed to implement the nonvolatile cache manager of FIGS. 1A, 1B, and 2 to handle data associations and/or disassociations between the nonvolatile cache of FIGS. 1A and 1B and the intermittently connectable storage media of FIGS. 1A and 1B when the intermittently connectable storage media is reconnected to the host system of FIGS. 1A and 1B.
FIG. 6 is an example processor platform capable of executing the example machine readable instructions represented by FIG. 3, FIG. 4, and/or FIG. 5 to implement the example nonvolatile cache manager of FIGS. 1A, 1B, and 2 to manage the intermittently connectable storage media of FIGS. 1A and 1B.

The figures are not to scale. Wherever possible, the same reference numbers will be used throughout the drawing(s) and accompanying written description to refer to the same or like parts.

### DETAILED DESCRIPTION

Examples disclosed herein may be used to manage intermittently connectable storage media. Intermittently connectable storage media include hardware devices such as removable storage media devices (e.g., removable solid-state nonvolatile storage media) and network attached storage (NAS) devices. Removable storage media include hardware memory/storage devices that connect to local wired or wireless physical interfaces (e.g., universal serial bus (USB) interfaces, secure digital (SD) interfaces, Wi-Fi wireless interfaces, Bluetooth wireless interfaces, etc.) of host systems. Removable solid-state nonvolatile storage media are prolific in computer systems in the form of universal serial bus (USB) thumb drives, secure digital (SD)/micro-SD cards, wireless connectivity capable drives, and other types of removable media. These types of low-cost storage devices are typically used for temporary storage of data, but have some disadvantages. For example, removable storage media today usually is slow (e.g., typically over 10 times lower performance than internal solid-state drives (SSDs) that systems ship with), causing systems to appear slow and/or unresponsive. In addition, removable storage media devices like SD cards, USB drives, or wireless connectivity capable drives can be removed from the system by the end-user with no notification to the operating system or applications which may be running and accessing the removable storage media devices. Such abrupt removal or surprise removal of the removable storage media can result in data corruption of blocks of data, individual files, or all data stored on the removable storage media.

NAS media includes hardware memory/storage devices capable of being associated with or attached to host systems via network connections. For example, a NAS may include a solid-state memory device or other type of memory technology to store information that is accessible over a network by one or more host systems. The NAS is provided with a network interface (e.g., a network interface card (NIC)) that can be connected to a network through a wired interface (e.g., an Ethernet connection) and/or a wireless interface (e.g., a Wi-Fi connection, a Bluetooth connection, etc.). Like removable nonvolatile storage media, NAS media devices also have disadvantages including user-perceived slow performance and the possibility of abrupt disconnection. The user-perceived slow performance is often due to network connectivity/congestion issues between the NAS device and the host system. Abrupt disconnection is often due to a host system dropping a network connection, which may be caused by losing wireless connectivity range of an access point, a dropped Internet connection, a dropped virtual private network (VPN) connection, a failing switch, a failing router, etc. Such abrupt removal or disconnection of a NAS device can result in data corruption of blocks of data, individual files, or all data stored on the NAS device.

Prior solutions to the surprise removal issue of plug-in type or mechanical insert-type removable storage media (e.g., USB drives, SD media cards, etc.) rely on mechanical interlocks and/or frequent use of synchronization primitives to help mitigate disruptions of any write operations that are in-flight or in progress at the time the removable storage media device is being removed. That is, mechanical interlock solutions rely on hardware switches to signal a host processor to undertake some action in response to the hardware switches detecting that the removable storage media device is being removed from a host system. For example, mechanical interlocks create a time window at which a hardware switch engaged by the removable storage media signals the host processor that the removable storage media is being disengaged. This time window is of uncertain duration because timing of mechanical interlock signaling is typically a function of how fast a removable memory card is physically removed from a host system. Although the time window is of uncertain duration, it can provide the host processor sufficient time to complete a single in-flight or in-process sub-operation of a write operation to the removable storage media. While this may help preserve consistency of data corresponding to a single operation on the removable storage media, it does not address operations that take more time than the available time window (e.g., a large data file being written to the media has not completed at the time the removable storage media device is removed from the host system, resulting in data corruption or inaccessibility of the file). Alternative prior solutions of using frequent synchronization primitives as checkpointing have the same disadvantages as prior mechanical interlock solutions. In addition, using frequent synchronization primitives as checkpointing also significantly reduces system performance resulting from data queues needing to be flushed on each synchronization operation.

To overcome performance disadvantages associated with prior management techniques for removable storage media devices, prior solutions create dynamic random access memory (DRAM) caches for data of removable storage media devices. Such DRAM caches of prior techniques are used to improve data access performance by caching data from removable storage media devices to host system DRAM. Data on host system DRAM can be accessed faster than data on removable storage media devices. However, such DRAM-based cache has marginal effectiveness because the cache size allowed in host memory is far smaller than the storage capacity of the removable storage media device itself. In addition, DRAM-based cache speeds up removable media accesses for read operations but not for write operations because write operations are typically flushed (e.g., written back) from the DRAM cache to the removable storage media device immediately to prevent data corruption in the possible event of surprise media removal. If such surprise media removal occurs before a cache flush to the removable storage media device completes, prior cache management techniques discard the data in the DRAM cache in response to the removable storage media device being separated from the host platform. In addition, DRAM-based cache must be reconstructed each time the removable storage media device is reconnected to the host platform even if no data on the removable storage media device changed relative to the previous time the removable storage media device was mounted on the host platform.

Examples disclosed herein overcome the above drawbacks associated with prior removable storage media devices. For example, examples disclosed herein may be used to implement nonvolatile caches on primary/permanent nonvolatile storage devices of host platforms for use with removable storage media devices, NAS devices, and/or any other type of intermittently connectable storage media. When an intermittently connectable storage media device is removably connected to such a host platform, examples disclosed herein can be used to copy data from the intermittently connectable storage media device to the nonvolatile cache for fast data access. In addition, examples disclosed herein provide cache management techniques to manage data caching in the nonvolatile cache and to preserve data consistency between changes made to data in the nonvolatile cache and data in the intermittently connectable storage media even when such intermittently connectable storage media is abruptly or unexpectedly removed from the host system.

In examples disclosed herein, a drive reference is created as a nonvolatile cache by a nonvolatile cache manager (e.g., implemented in hardware and/or software) when the intermittently connectable storage media device is mounted to a host platform. Examples disclosed herein preserve the drive reference upon abrupt or unexpected removal or disconnection of the intermittently connectable storage media from the host platform so that the host platform does not become aware of the intermittently connectable media disappearing. Examples disclosed herein also manage cache writes differently from prior removable media management techniques. For example, upon detecting that intermittently connectable storage media is disconnected from the host platform, examples disclosed herein change cache writes from a write-through cache mode (e.g., mode to immediately flush data from nonvolatile cache to intermittently connectable storage media) to a write-back cache mode (e.g., a mode to store changed data in nonvolatile cache and flush to intermittently connectable storage media at a later time such as when the intermittently connectable storage media is reconnected to the host platform). In this manner, upon removal or connection loss of the intermittently connectable storage media from the host platform, the nonvolatile cache absorbs or accepts new writes and satisfies requested reads based on cached data. This allows a program to continue accessing locally cached data that is associated with the intermittently connectable storage media in the event of an abrupt or unexpected removal or connection loss of the intermittently connectable storage media from the host platform. In this manner, by employing the nonvolatile cache, data accesses that are in progress and/or initiated by the program after removal or disconnection of the intermittently connectable storage media do not cause the program to crash or hang. When a user reconnects or remounts an intermittently connectable storage media device to the host platform, examples disclosed herein can be employed to manage data synchronization between the nonvolatile cache and the intermittently connectable storage media device while substantially reducing or eliminating program faults/crashes.

Examples disclosed herein may be used in connection with any type of intermittently connectable storage media that can be dynamically connected and/or disconnected from the host platform. Examples of such intermittently connectable storage media include USB flash drives, memory cards (e.g., SD memory cards, Personal Computer Memory Card International Association (PCMCIA) memory cards, etc.), memory devices integrated into docking stations and/or connected to docking stations, wireless connectivity capable drives, NAS devices, etc. For example, for memory devices connected to docking stations, examples disclosed herein may be used to manage accesses to such memory devices to improve data access performance and to substantially eliminate or reduce likelihoods of data corruption when host platforms (e.g., a laptop, a tablet, etc.) are abruptly or unexpectedly removed from the docking stations.

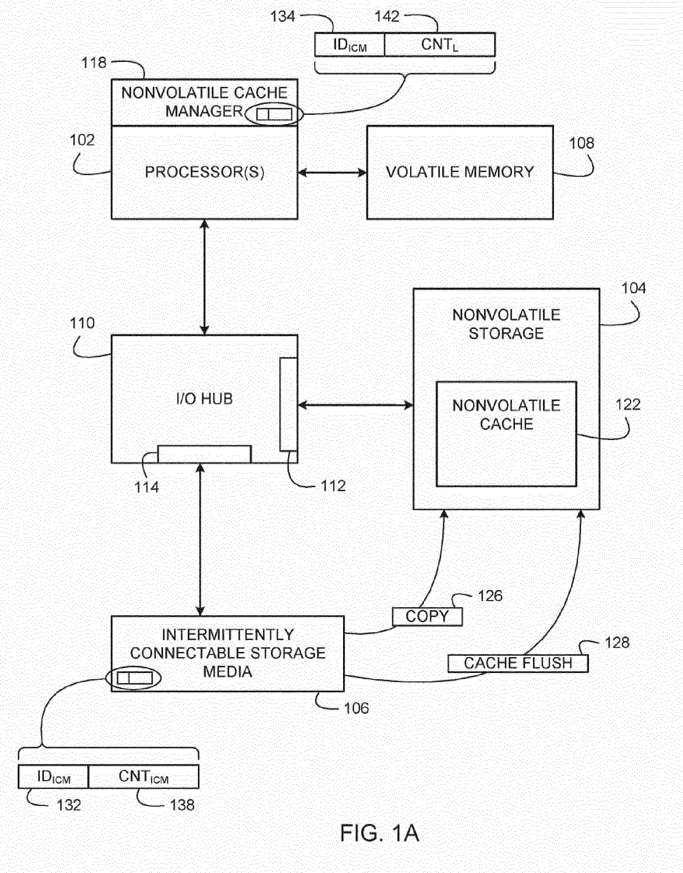

FIG. 1A illustrates an example host platform or host system 100 to manage intermittently connectable storage media in accordance with the teachings of this disclosure. The example host system 100 includes one or more processors 102 in circuit with example nonvolatile storage 104, an example intermittently connectable storage media device 106, and example volatile memory 108. In the illustrated example, the nonvolatile storage 104 and the intermittently connectable storage media device 106 are in circuit with the processor(s) 102 via an example input/output (I/O) hub 110 (e.g., a storage device interface). The example I/O hub 110 manages, arbitrates, and controls servicing of data access requests between the processor(s) 102, the nonvolatile storage 104, and the intermittently connectable storage media device 106. In addition, the example I/O hub 110 services such data access requests by performing data writes to and data reads from the nonvolatile storage 104 and the intermittently connectable storage media device 106. In some examples, the I/O hub 110 may be implemented using a platform controller hub (PCH). The example nonvolatile storage 104 (e.g., a primary or permanent storage of the host system 100) is shown as a solid state drive (SSD). In the illustrated example, an SSD includes a memory controller and an interface to a host. The SSD includes non-volatile memory which may be implemented using any nonvolatile memory device (e.g., memory devices that use chalcogenide glass, single-threshold or multi-threshold level NAND flash memory, NOR flash memory, 3D flash memory, ferroelectric transistor random access memory (FeTRAM or FeRAM), multi-level phase change random access memory (PRAM, PCM), anti-ferroelectric memory, magnetoresistive random access memory (MRAM) memory that incorporates memristor technology, resistive memory including the metal oxide base, oxygen vacancy base and conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thiristor based memory device, non-volatile RAM (NVRAM), resistive random access memory (ReRAM), a resistive memory, nanowire memory, or a combination of any of the above, or other memory). Non-volatile memory of the SSD may additionally or alternatively include a byte addressable write-in-place memory such as three dimensional (3D) crosspoint memory or any other byte-addressable write-in-place nonvolatile memory device(s). In some examples, 3D crosspoint memory may include a transistor-less stackable cross point architecture in which memory cells are located at the intersections of word lines and bit lines and are individually addressable, and in which bit storage is based on a change in bulk resistance. The memory device may refer to the die itself and/or to a packaged memory product.

The example volatile memory 108 may be implemented using any type of volatile storage. The example volatile memory 108 may be a storage medium that requires power to maintain the state of data stored by the medium. Examples of volatile memory that may be used to implement the volatile memory 108 include various types of random access memory (RAM), such as dynamic random access memory (DRAM) or static random access memory (SRAM). An example types of DRAM that may be used in a memory module to implement the volatile memory 108 is synchronous dynamic random access memory (SDRAM). In some examples, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards, and communication interfaces of the storage devices that implement such standards may be referred to as DDR-based interfaces. The memory device may refer to the die itself and/or to a packaged memory product.

The I/O hub 110 of the illustrated example includes an example fixed nonvolatile storage interface 112 configured to fixedly connect to the nonvolatile storage 104. The example fixed nonvolatile storage interface 112 may be implemented using a Peripheral Component Interconnect Express (PCIe) interface and a Non-volatile Memory Express (NVMe) transfer protocol (e.g., a PCIe NVMe interface). As used herein, NVMe refers to a logical device interface (http://www.nvmexpress.org) for accessing non-volatile storage media attached via a Peripheral Component Interconnect Express (PCIe) bus (http://www.pcsig.com). For example, NVMe may be used to access low latency storage devices in computer systems, including personal and enterprise computer systems, and can also be deployed in data centers requiring scaling of thousands of low latency storage devices.

In examples disclosed herein, fixedly connecting storage refers to a memory being connected to or mounted to the host system 100 in such a manner that the memory is not intended to be unmounted or disconnected from the host system 100 during operation of the host system 100. Instead, a memory that is fixedly connected to the example host system 100 is intended to be mounted/connected to the host system 100 before the host system 100 boots, and the memory is intended to remain mounted or connected to the host system 100 until the host system 100 is shutdown (e.g., no longer running or no longer powered up). In some examples, the nonvolatile storage 104 is in circuit with or connected with the I/O hub 110 to store a master boot record (MBR), operating system (OS) files, system files, etc. that need to be persisted through times when power is removed from the host system 100. For example, upon power up, the host system 100 may boot from and load an OS from the nonvolatile storage 104.

The I/O hub 110 of the illustrated example also includes an example intermittently connectable storage media interface 114 configured to removably connect to intermittently connectable storage media devices such as the intermittently connectable storage media device 106. The example intermittently connectable storage media interface 114 can be implemented using a USB interface, a memory card interface (e.g., an SD memory card interface, a PCMCIA interface, etc.), a docking station interface, etc. In some examples in which the intermittently connectable storage media 106 is a NAS device, the intermittently connectable storage media interface 114 is a NIC interface that enables the host system 100 to connect to the NAS device over a network connection. In some examples in which the intermittently connectable storage media 106 is a wireless storage device, the intermittently connectable storage media interface 114 is configured to connect to a radio module (e.g., a Wi-Fi module, a Bluetooth module, etc.). In other examples, a NIC and/or a radio module may interface directly with the processor(s) 102 instead of through the I/O hub 110. In examples disclosed herein, intermittently connectable storage media that can be removably connected to a host system 100 refers to memory intended to be mounted/connected to and/or unmounted/disconnected from the host system 100 during operation of the host system 100. For example, the intermittently connectable storage media device 106 may be connected/mounted to the host system 100 after the host system 100 is booted and is in a runtime execution environment (e.g., in an OS environment). In addition, the intermittently connectable storage media device 106 may be disconnected/unmounted from the host system 100 while the host system 100 is still running in the runtime execution environment. That is, it is not necessary for the host system 100 to be shut down before removing the intermittently connectable storage media device 106 because the host system 100 is provided with hardware and/or software to manage dynamically disconnecting/unmounting of the intermittently connectable storage media device 106 during operation of the host system 100.

In the illustrated example FIG. 1A, the host system 100 includes an example nonvolatile cache manager 118 to manage intermittently connectable storage media. For example, nonvolatile cache manager 118 is configured to manage the intermittently connectable storage media device 106 to provide data consistency between the host system 100 and the intermittently connectable storage media device 106 both when the intermittently connectable storage media device 106 is mounted to the host system 100 and when the intermittently connectable storage media device 106 is unmounted from the host system 100. In the illustrated example, when the nonvolatile cache manager 118 detects that the intermittently connectable storage media device 106 is mounted or connected to the host system 100, the nonvolatile cache manager 118 creates a nonvolatile cache 122 in the nonvolatile storage 104 for the intermittently connectable storage media device 106. For example, the nonvolatile cache manager 118 may detect data access speeds (e.g., write and/or read speeds) and/or storage capacity of the intermittently connectable storage media 106 and allocate a memory area in the nonvolatile storage 104 as the nonvolatile cache 122 that is of sufficient size (e.g., based on the data access speeds and/or storage capacity of the intermittently connectable storage media device 106) to achieve a desired data access performance associated with the intermittently connectable storage media device 106. For example, a desired data access performance may be based on subjective criteria such as a desired user experience associated with a perceived amount of lag for accessing data in the intermittently connectable storage media device 106. In some examples, the desired data access performance may be based on objective criteria such as the need to access large amounts of data quickly in media (e.g., video and/or audio) editing applications, gaming applications, large database applications, etc. An intermittently connectable storage media device having fast data access speeds may require a smaller-sized nonvolatile cache 122 to achieve a desired data access performance than an intermittently connectable storage media device having slower data access speeds. That is, if data access speeds are faster for an intermittently connectable storage media device, less data needs to be cached or buffered in the nonvolatile cache 122 because cache flushes (e.g., writing data back from the nonvolatile cache 122 to the intermittently connectable storage media device 106) can be completed faster based on the faster data access speeds of the intermittently connectable storage media device. In some examples, an intermittently connectable storage media device having a small storage capacity may require a smaller-sized nonvolatile cache 122 to achieve a desired data access performance than an intermittently connectable storage media device having a larger storage capacity. Although size of nonvolatile caches (e.g., the nonvolatile cache 122) can be different from one intermittently connectable storage media device to another, some studies have shown that a minimum cache size of 16GB provides a good user experience.

In examples disclosed herein, the nonvolatile cache 122 is a storage area to which the processor 102 and/or I/O hub 110 write data that is intended to be written to the intermittently connectable storage media 106 and from which the processor 102 and/or I/O hub 110 reads data that is intended to be read from the intermittently connectable storage media 106. That is, when a write request indicates a destination memory address corresponding to the intermittently connectable storage media 106 as a destination for data to be written, the processor 102 and/or the I/O hub 110 can instead write the data to one or more corresponding cache lines of the nonvolatile cache 122. The data can subsequently be flushed through to the intermittently connectable storage media 106. In addition, when a read request indicates a source memory address corresponding to the intermittently connectable storage media 106 from which data is to be read, the processor 102 and/or the I/O hub 110 can instead read the data from one or more corresponding cache lines of the nonvolatile cache 122 if the requested data is cached in the nonvolatile cache 122. In some examples, the nonvolatile cache manager 118 establishes and concurrently maintains multiple nonvolatile caches 122 for different intermittently connectable storage media devices 106 connected concurrently or at different times to the host system 100.

In the illustrated example, using the nonvolatile storage 104 to create the nonvolatile cache 122 allows cached data from the intermittently connectable storage media device 106 to be preserved or persisted in a nonvolatile manner across system power events (e.g., shutdowns, reboots, power failures, etc.). This is advantageous over volatile DRAM-based caches that lose contents upon removal of power. In the illustrated example, when data is read from the intermittently connectable storage media device 106, the nonvolatile cache manager 118 manages copying 126 (or caching) the read data (e.g., block(s) of data, a file, or a partial file) to the nonvolatile cache 122. In this manner, any subsequent read access of the same data (e.g., the same block(s) of data, the same file, or the same partial file) intended to be read from a memory address of the intermittently connectable storage media device 106 can be serviced by reading the data from the nonvolatile cache 122. In addition, when a process of the host system 100 modifies data intended to be written to a memory address of the intermittently connectable storage media device 106, the nonvolatile cache manager 118 instead writes the modified data to the nonvolatile cache 122. In some examples, reading and/or writing to/from the nonvolatile cache 122 instead of the intermittently connectable storage media device 106 can be quicker. The nonvolatile cache manager 118 subsequently manages cache flushing 128 the modified data (e.g., dirty writes) from the cache 122 to the intermittently connectable storage media device 106 in a manner that does not negatively impact the performance of the process that modified the data.

In the illustrated example, the nonvolatile cache manager 118 sets a cache flush mode of the nonvolatile cache 122 to a write through cache mode so that data writes directed to the intermittently connectable storage media device 106 are cached in the nonvolatile cache 122 and immediately flushed or written to the intermittently connectable storage media device 106 while the intermittently connectable storage media device 106 is connected to the host system 100. Also, while the intermittently connectable storage media device 106 is connected to the host system 100, when a cache hit occurs on requested data, the data is retrieved from the cache, but when a cache miss occurs, the requested data is retrieved from the intermittently connectable storage media device 106. When the intermittently connectable storage media device 106 is disconnected from the host system 100, the nonvolatile cache manager 118 sets a cache flush mode of the nonvolatile cache 122 to a writeback mode to delay flushes of cache data until, for example, the intermittently connectable storage media device 106 is reconnected to the host system 100.

In the illustrated example, the nonvolatile cache manager 118 is configured to manage a number of different intermittently connectable storage media devices that are removably connected to the host system 100 either concurrently or at different times. For example, although only one intermittently connectable storage media interface 114 is shown, the I/O hub 110 may include multiple intermittently connectable storage media interfaces 114 such that two or more intermittently connectable storage media devices may be connected or mounted to the host system 100 concurrently. Alternatively, the intermittently connectable storage media interface 114 may connect to multiple intermittently connectable storage media devices concurrently. To track the different ones of the intermittently connectable storage media devices, the nonvolatile cache manager 118 stores intermittently connectable storage media device IDs (ID_{ICM}) of the different intermittently connectable storage media devices. For example, in FIG. 1A, the intermittently connectable storage media device 106 includes a intermittently connectable storage media device ID (ID_{ICM}) 132 that is stored by the nonvolatile cache manager 118 as a local copy of the intermittently connectable storage media device ID (ID_{ICM}) as identified by reference numeral 134.

In the illustrated example of FIG. 1A, the intermittently connectable storage media device 106 also stores an example write count (CNT_{ICM}) 138. In the illustrated example, the write count (CNT_{ICM}) 138 is maintained on the intermittently connectable storage media device 106, and it is updated by the host system 100 (or by any host system to which the intermittently connectable storage media device 106 is connected) anytime a write is performed to the intermittently connectable storage media device 106. In the illustrated example, the example write count (CNT_{ICM}) 138 reflects an instance of a write to the intermittently connectable storage media device 106 without regard to which particular block(s) of data or file was/were modified. Thus, if writes are performed to two different files, the write count 138 is incremented twice for the entire intermittently connectable storage media device 106 but does not reflect which block(s) of data or files were modified. In other examples, techniques disclosed herein may be used in connection with multiple separate write counts maintained on the intermittently connectable storage media device 106 for respective block(s) of data or files stored on the intermittently connectable storage media device 106.

In the illustrated example, the nonvolatile cache manager 118 stores a local copy of the write count (CNT_{ICM}) 138 in association with the local intermittently connectable storage media device ID (ID_{ICM}) 134 shown in FIG. 1A as a local write count (CNT_{L}) 142. When the intermittently connectable storage media device 106 is unmounted or disconnected from the host system 100, the nonvolatile cache manager 118 maintains or persists the local write count (CNT_{ICM}) 142. When the intermittently connectable storage media device 106 is no longer mounted or connected to the host system 100, the nonvolatile cache manager 118 changes a cache flush mode corresponding to the nonvolatile cache 122 from a write through mode (e.g., cache flushes to the intermittently connectable storage media device 106 are performed immediately) to a writeback mode (e.g., cache flushes to the intermittently connectable storage media device 106 are delayed until, for example, the intermittently connectable storage media device 106 is reconnected to the host system 100). In this manner, the nonvolatile cache manager 118 and the nonvolatile cache 122 enable processes of the host system 100 to continue accessing any data of the intermittently connectable storage media device 106 that is cached in the nonvolatile cache 122. The nonvolatile cache manager 118 and the nonvolatile cache 122 substantially reduce or eliminate data corruption or process crashes that would otherwise result from abrupt or unexpected removal of the intermittently connectable storage media device 106 from the host system 100 while processes are still trying to perform data accesses on the intermittently connectable storage media device 106. For example, any data accesses that are in process or in queue after the intermittently connectable storage media device 106 has been unmounted or disconnected from the host system 100 can be completed in the nonvolatile cache 122 if the nonvolatile cache 122 stores the corresponding data being requested and/or if the nonvolatile cache 122 has sufficient capacity to store data from a requested write operation.

In some examples, after receiving a data read request corresponding to data that is not cached in the nonvolatile cache 122 or after receiving a data write request when the nonvolatile cache 122 is full (e.g., cannot store additional data), the nonvolatile cache manager 118 may cause the host system 100 to display a user interface dialog box prompting the user to reconnect the intermittently connectable storage media device 106. In some examples, this may be done by informing a user that the local cache (e.g., the nonvolatile cache 122) of the intermittently connectable storage media device 106 is full and/or lacks the requested data, and that the user needs to reconnect the intermittently connectable storage media device 106 to the host system 100. In some examples, a graphical user interface (GUI) of a filesystem may be displayed to show available files and unavailable files from the intermittently connectable media storage device 106 based on which files are cached in the nonvolatile cache 122. For example, available cached files may be shown as user selectable darkened icons, and non-cached files may be shown as greyed out icons that are not user-selectable. In some examples, OS-supported reparse points may be used to display the grayed-out icons. In such examples, when the reports points are selected by a user, the nonvolatile cache manager 118 may cause a host system 100 to display a message requesting the user to reconnect the intermittently connectable storage media device 106. Also in such examples, when the intermittently connectable storage media device 106 is reconnected, the reparse points corresponding to the grayed-out icons are converted to user-selectable darkened icons for their corresponding files that are available in the intermittently connectable storage media device 106.

In examples disclosed herein, block(s) of data and/or files, or more generally data, cached in the nonvolatile cache 122 are considered master copies in that if the block(s) of data and/or files are modified in the nonvolatile cache 122 when the intermittently connectable storage media device 106 is no longer connected, and are not modified in the intermittently connectable storage media device 106, cache associations between the master copies of the block(s) of data and/or files in the nonvolatile cache 122 and corresponding block(s) of data and/or files in the intermittently connectable storage media device 106 can be reestablished when the intermittently connectable storage media device 106 is remounted or reconnected to the host system 100. When the master copies of the block(s) of data and/or files are modified in the nonvolatile cache 122 while the intermittently connectable storage media device 106 is unmounted or disconnected from the host system 100, the local write count (CNT_{L}) 142 is not updated. Instead, in the illustrated example, the local write count (CNT_{L}) 142 remains the same as the most recent copy of the intermittently connectable storage media write count (CNT_{ICM}) 138 from the intermittently connectable storage media device 106 before the intermittently connectable storage media device 106 was disconnected. Keeping the local write count (CNT_{L}) 142 unchanged in the illustrated example enables the nonvolatile cache manager 118 to determine whether block(s) of data and/or files on the intermittently connectable storage media device 106 were modified by another host system during the time that the intermittently connectable storage media device 106 was not mounted to the host system 100 of FIG. 1A. For example, when the intermittently connectable storage media device 106 is reconnected to the host system 100, the nonvolatile cache manager 118 compares the local write count (CNT_{L}) 142 to the intermittently connectable storage media write count (CNT_{ICM}) 138 stored on the intermittently connectable storage media device 106. If the nonvolatile cache manager 118 finds a mismatch between the local write count (CNT_{L}) 142 and the intermittently connectable storage media write count (CNT_{ICM}) 138 (e.g., the intermittently connectable storage media write count (CNT_{ICM}) 138 has been incremented by another host system), the nonvolatile cache manager 118 determines that data on the intermittently connectable storage media device 106 was modified by another host system while the intermittently connectable storage media device 106 was not mounted to the host system 100. In examples disclosed herein, a mismatch is confirmed when the nonvolatile cache manager 118 determines that the difference between the local write count (CNT_{L}) 142 and the intermittently connectable storage media write count (CNT_{ICM}) 138 is greater than zero.

When there is a mismatch between the local write count (CNT_{L}) 142 and the intermittently connectable storage media write count (CNT_{ICM}) 138, the nonvolatile cache manager 118 determines which data has changed. For example, the nonvolatile cache manager 118 may compare metadata of cache files in the nonvolatile cache 122 to metadata of corresponding non-cache files in the intermittently connectable storage media device 106 to identify which data of the intermittently connectable storage media device 106 was modified relative to cached versions of the data in the nonvolatile cache 122. Example metadata that may be used by the nonvolatile cache manager 118 includes last modified date and her last modified time of files. In some examples, the nonvolatile cache manager 118 disassociates (e.g., invalidates) the nonvolatile cache 122 entirely from the intermittently connectable storage media device 106 when there are newer versions of modified data in the intermittently connectable storage media device 106 relative to corresponding data previously cached in the nonvolatile cache 122. In some examples, the nonvolatile cache manager 118 disassociates (e.g., invalidates) only portions of the nonvolatile cache 122 corresponding to newer versions of data on the intermittently connectable storage media device 106 while maintaining associations between other portions of the nonvolatile cache 122 storing cache data that correspond to non-modified non-cache data in the intermittently connectable storage media device 106. In yet other examples, the nonvolatile cache manager 118 maintains association of all cache data in the nonvolatile cache 122 in its entirety with the intermittently connectable storage media device 106 when none of the non-cache data on the intermittently connectable storage media device 106 has been modified relative to corresponding cache data in the nonvolatile cache 122 (e.g., the local write count (CNT_{L}) 142 matches the intermittently connectable storage media write count (CNT_{ICM}) 138).

In examples disclosed herein, when the nonvolatile cache manager 118 detects that the cache data in the nonvolatile cache 122 contains dirty writes (e.g., the cache data was modified by write operations in the nonvolatile cache 122), the nonvolatile cache manager 118 flushes the dirty writes to the intermittently connectable storage media device 106 when the intermittently connectable storage media device 106 is reconnected to the host system 100. In examples disclosed herein, dirty writes are tracked in the nonvolatile cache 122 using any suitable cache modification tracking technique (e.g., setting dirty bits or modified bits for corresponding cache lines or other blocks of the nonvolatile cache 122).

In some examples, when one or more files on the intermittently connectable storage media device 106 have been modified by another host system, the nonvolatile cache manager 118 can cause the host system 100 to prompt a user for confirmation of which file to keep. In such examples, the user can be given the option to keep the cache version of the file stored in the nonvolatile cache 122 or to keep the non-cache version of the file in the intermittently connectable storage media device 106. If the user selects to keep the cache version of the file stored in the nonvolatile cache 122, the nonvolatile cache manager 118 writes back the cache version of the file from the nonvolatile cache 122 to the intermittently connectable storage media device 106 (e.g., overwriting the non-cache version of the file in the intermittently connectable storage media device 106). Alternatively, if the user selects to keep the non-cache version of the file in the intermittently connectable storage media device 106, the nonvolatile cache manager 118 disassociates the cache version of the file from the intermittently connectable storage media device 106. In this manner, the cache version of the file in the nonvolatile cache 122 is discarded (e.g., can be subsequently overwritten by other cache data).

In examples disclosed herein, creating a communicative connection between the intermittently connectable storage media device 106 and the host system 100 is referred to as mounting or connecting, and breaking or removing a communicative connection between the intermittently connectable storage media device 106 and the host system 100 is referred to as unmounting or disconnecting. As used herein, mounting or connecting refers to physically and/or logically mounting or connecting the intermittently connectable storage media device 106 to the host system 100, and unmounting or disconnecting refers to physically and/or logically unmounting or disconnecting the intermittently connectable storage media device 106 from the host system 100. For example, in examples disclosed herein mounting or connecting of the intermittently connectable storage media device 106 causes, effectuates, or triggers the nonvolatile cache manager 118 to initialize the nonvolatile cache 122. Also in examples disclosed herein, unmounting or disconnecting other intermittently connectable storage media device 106 from the host system 100 causes, effectuates, or triggers the nonvolatile cache manager 118 to configure the nonvolatile cache 122 for operation in a writeback mode such that cache flushes to the intermittently connectable storage media device 106 are not immediate (e.g., because the intermittently connectable storage media device 106 is unmounted or disconnected). As such, examples disclosed herein may be caused to configure the nonvolatile cache 122 in response to logical and/or physical mounting or connecting and logical and/or physical unmounting or disconnecting of the intermittently connectable storage media device 106.

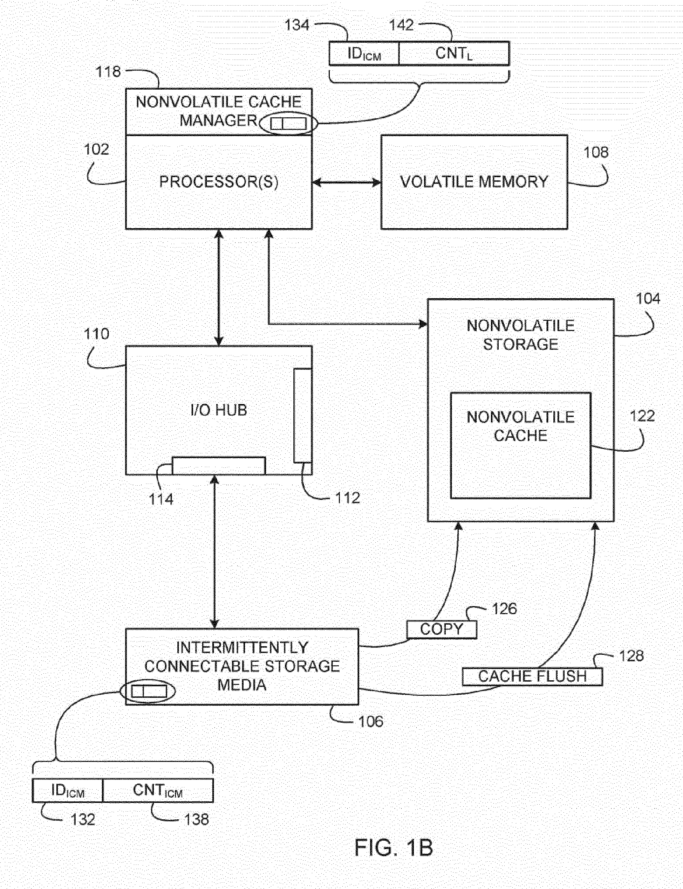

FIG. 1B illustrates another configuration of the example host system 100 of FIG. 1A to manage the intermittently connectable storage media 106 in accordance with the teachings of this disclosure. In the illustrated example of FIG. 1B, the nonvolatile storage 104 is connected directly to the processor(s) 102. For example, the nonvolatile storage 104 may be implemented using a 3D crosspoint memory device that interfaces directly with a DDR memory interface or another system memory interface of the processor(s) 102. In this manner, the processor(s) 102 can access data in the 3D crosspoint memory device using byte-based addressing or block-based addressing capabilities of the 3D crosspoint memory device. In addition, by using 3D crosspoint memory devices, examples disclosed herein can be used to access the nonvolatile cache 122 in the nonvolatile storage 104 based on DRAM-like access speeds associated with 3D crosspoint memory. In other examples, the nonvolatile storage 104 of FIG. 1B may be implemented using any other type of nonvolatile storage 104 capable of interfacing directly with processors (e.g., SSDs that interface directly with processors).

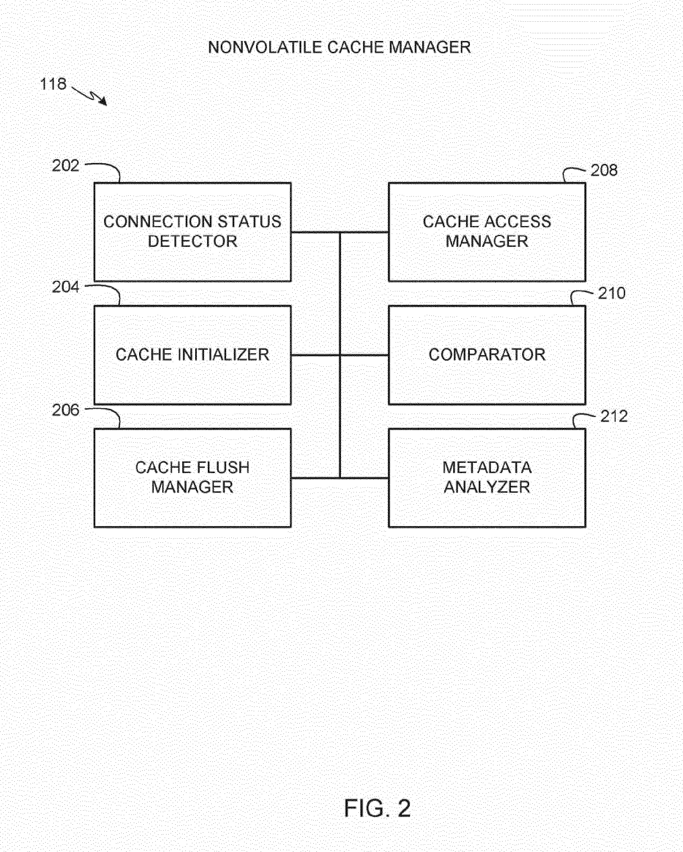

FIG. 2 illustrates the example nonvolatile cache manager 118 of FIGS. 1A and 1B to manage the intermittently connectable storage media device 106 of FIGS. 1A and 1B in accordance with the teachings of this disclosure. The example nonvolatile cache manager 118 includes an example connection status detector 202, an example cache initializer 204, an example cache flush manager 206, an example cache access manager 208, an example comparator 210, and an example metadata analyzer 212. The example connection status detector 202 is provided to detect when the intermittently connectable storage media device 106 (FIGS. 1A and 1B) is mounted or connected to the host system 100 (FIGS. 1A and 1B) and when the intermittently connectable storage media device 106 is unmounted or disconnected from the host system 100. For example, when the intermittently connectable storage media device 106 is physically connected to the host system 100 (e.g., via a USB interface, via an SD card interface, etc.) the connection status detector 202 may be connected to a mechanical switch that is engaged/disengaged by the intermittently connectable storage media device 106 when the intermittently connectable storage media device 106 is physically connected/disconnected to/from the host system 100. Alternatively or additionally, the connection status detector 202 may be connected to an electronic circuit that generates a signal when the intermittently connectable storage media device 106 is connected/disconnected to/from the host system 100. When the intermittently connectable storage media device 106 is a wirelessly connected device (e.g., via a Wi-Fi wireless connection, a Bluetooth wireless connection, etc.), the connection status detector 202 may receive a notification from a wireless interface of the host system 100 indicating an imminent disconnection or completed disconnection of the intermittently connectable storage media device 106.

In some examples, when the intermittently connectable storage media device 106 is a NAS device, the connection status detector 202 may receive a notification from an operating system of the host system 100 via a registered software callback to indicate that the intermittently connectable storage media device 106 will be disconnected or has been disconnected.

The example cache initializer 204 is provided to initialize the nonvolatile cache 122 (FIGS. 1A and 1B) and the nonvolatile storage 104 (FIGS. 1A and 1B). The example cache flush manager 206 is provided to manage cache flushes from the nonvolatile cache 122 to the intermittently connectable storage media device 106. In the illustrated example, the cache flush manager 206 is also provided to set different cache flush modes in the host system 100 for the nonvolatile cache 122 based on whether the intermittently connectable storage media device 106 is connected or disconnected from the host system 100. The example cache access manager 208 is provided to manage data accesses to the nonvolatile cache 122 based on data accesses requested for the intermittently connectable storage media device 106. The example cache access manager 208 is also provided to store the media device ID (ID_{ICM}) 134 FIGS. 1A and 1B and the local write count (CNT_{L}) 142 in the nonvolatile cache manager 118 (e.g., in a nonvolatile register of the nonvolatile cache manager 118). Alternatively, in some examples the cache access manager 208 stores the media device ID (ID_{ICM}) 134 FIGS. 1A and 1B and the local write count (CNT_{L}) 142 in a nonvolatile memory location such as in the nonvolatile cache 122.

The example comparator 210 is provided to compare the local write count (CNT_{L}) 142 with the intermittently connectable storage media write count (CNT_{ICM}) 138 of FIGS. 1A and 1B. When the example comparator 210 identifies a mismatch between the local write count (CNT_{L}) 142 and the intermittently connectable storage media write count (CNT_{ICM}) 138, the comparator 210 determines that data (e.g., one or more blocks of data, one or more files, etc.) on the intermittently connectable storage media device 106 was modified by another host system during the time that the intermittently connectable storage media device 106 was not connected to the host system 100 of FIGS. 1A and 1B. The example comparator 210 is also provided to compare intermittently connectable media storage device IDs (e.g., the media device ID (ID_{ICM}) 134 of FIGS. 1A and 1B). For example, when the intermittently connectable storage media device 106 is reconnected to the host system 100, the comparator 210 can determine whether the device ID (ID_{ICM}) 134 of the intermittently connectable storage media device 106 matches a device ID (ID_{ICM}) 134 stored in the host system 100. If so, the nonvolatile cache 122 corresponds to the intermittently connectable storage media device 106, in the illustrated example of FIGS. 1A and 1B.

The example metadata analyzer 212 is provided to analyze metadata of data (e.g., metadata of blocks of data and/or files) stored in the nonvolatile cache 122 relative to metadata of corresponding data stored on the intermittently connectable storage media device 106. In this manner, when the comparator 210 finds a mismatch between the local write count (CNT_{L}) 142 and the intermittently connectable storage media write count (CNT_{ICM}) 138, the metadata analyzer 212 can compare metadata of cache data in the nonvolatile cache 122 with metadata of corresponding non-cache data in the intermittently connectable storage media device 106 to identify which data (e.g., which one or more bocks of data and/or files) on the intermittently connectable storage media device 106 was modified during the time that the intermittently connectable storage media device 106 was not mounted to the host system 100.

In the illustrated example of FIG. 2, the example connection status detector 202 may be used to implement means for detecting the mount status of the intermittently connectable storage media device 106, the example cache initializer 204 may be used to implement means for initializing the nonvolatile cache 122, the example cache flush manager 206 may be used to implement means for flushing cached data from the nonvolatile cache 122 to the intermittently connectable storage media device 106, the example cache access manager 208 may be used to implement means for managing cache accesses associated with the nonvolatile cache 122, the example comparator 210 may be used to implement means for comparing write counts (e.g., the local write count (CNT_{L}) 142 and the intermittently connectable storage media write count (CNT_{ICM}) 138 of FIGS. 1A and 1B), and the example metadata analyzer 212 may be used to implement means for comparing metadata of data cached in the nonvolatile cache 122 and stored in the intermittently connectable storage media device 106.

While an example manner of implementing the nonvolatile cache manager 118 of FIGS. 1A and 1B is illustrated in FIG. 2, one or more of the elements, processes and/or devices illustrated in FIG. 2 may be combined, divided, re-arranged, omitted, eliminated and/or implemented in any other way. Further, the example connection status detector 202, the example cache initializer 204, the example cache flush manager 206, the example cache access manager 208, the example comparator 210, and the example metadata analyzer 212 and/or, more generally, the example nonvolatile cache manager 118 of FIG. 2 may be implemented by hardware, software, firmware and/or any combination of hardware, software and/or firmware. Thus, for example, any of the example connection status detector 202, the example cache initializer 204, the example cache flush manager 206, the example cache access manager 208, the example comparator 210, and the example metadata analyzer 212 and/or, more generally, the example nonvolatile cache manager 118 could be implemented by one or more analog or digital circuit(s), logic circuits, programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example connection status detector 202, the example cache initializer 204, the example cache flush manager 206, the example cache access manager 208, the example comparator 210, and/or the example metadata analyzer 212 is/are hereby expressly defined to include a non-transitory computer readable storage device or storage disk such as a memory, a digital versatile disk (DVD), a compact disk (CD), a Blu-ray disk, etc. including the software and/or firmware. Further still, the example nonvolatile cache manager 118 of FIGS. 1A and 1B may include one or more elements, processes and/or devices in addition to, or instead of, those illustrated in FIG. 2, and/or may include more than one of any or all of the illustrated elements, processes and devices.

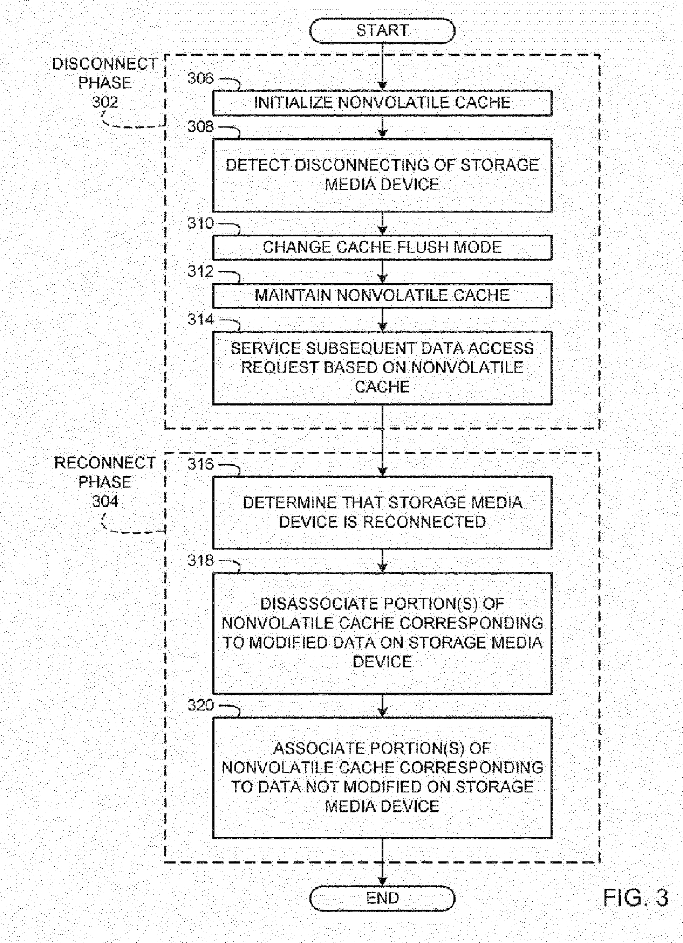

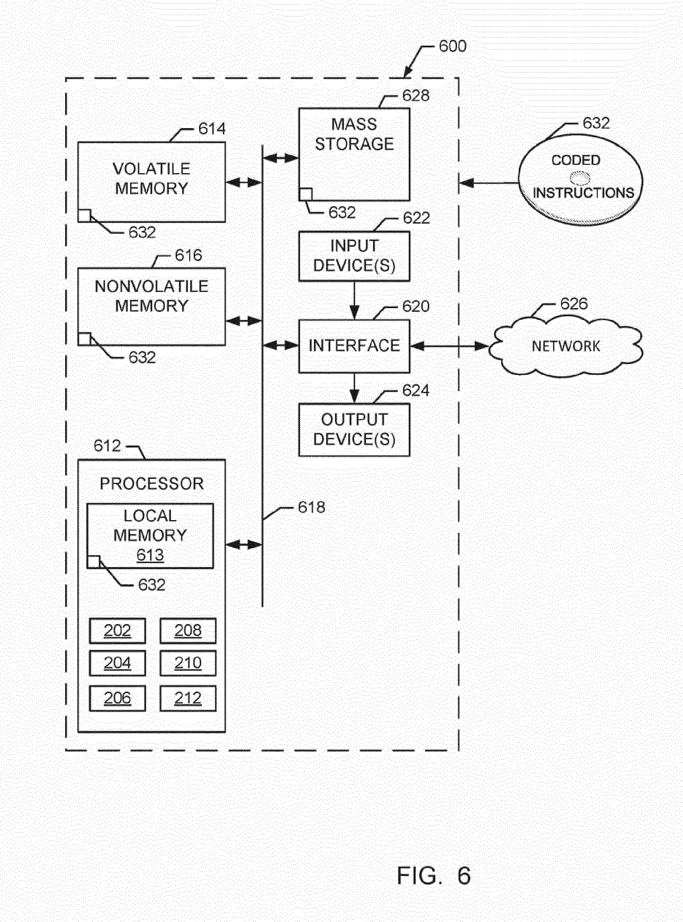

Flowcharts representative of example machine readable instructions for implementing the nonvolatile cache manager 118 of FIGS. 1A, 1B, and 2 are shown in FIGS. 3-5. In these examples, the machine readable instructions form one or more programs for execution by a processor such as the processor 612 shown in the example processor platform 500 discussed below in connection with FIG. 6. The program(s) may be embodied in software stored on a non-transitory computer readable storage medium such as a CD-ROM, a floppy disk, a hard drive, a digital versatile disk (DVD), a Blu-ray disk, or a memory associated with the processor 612, but the entire program and/or parts thereof could alternatively be executed by a device other than the processor 612 and/or embodied in firmware or dedicated hardware. Further, although the example program(s) is/are described with reference to the flowcharts illustrated in FIGS. 3-5, many other methods of implementing the example the nonvolatile cache manager 118 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, a Field Programmable Gate Array (FPGA), an Application Specific Integrated circuit (ASIC), a comparator, an operational-amplifier (op-amp), a logic circuit, etc.) structured to perform the corresponding operation without executing software or firmware.

As mentioned above, the example processes of FIGS. 3-5 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. "Including" and "comprising" (and all forms and tenses thereof) are used herein to be open ended terms. Thus, whenever a claim lists anything following any form of "include" or "comprise" (e.g., comprises, includes, comprising, including, etc.), it is to be understood that additional elements, terms, etc. may be present without falling outside the scope of the corresponding claim. As used herein, when the phrase "at least" is used as the transition term in a preamble of a claim, it is open-ended in the same manner as the term "comprising" and "including" are open ended.

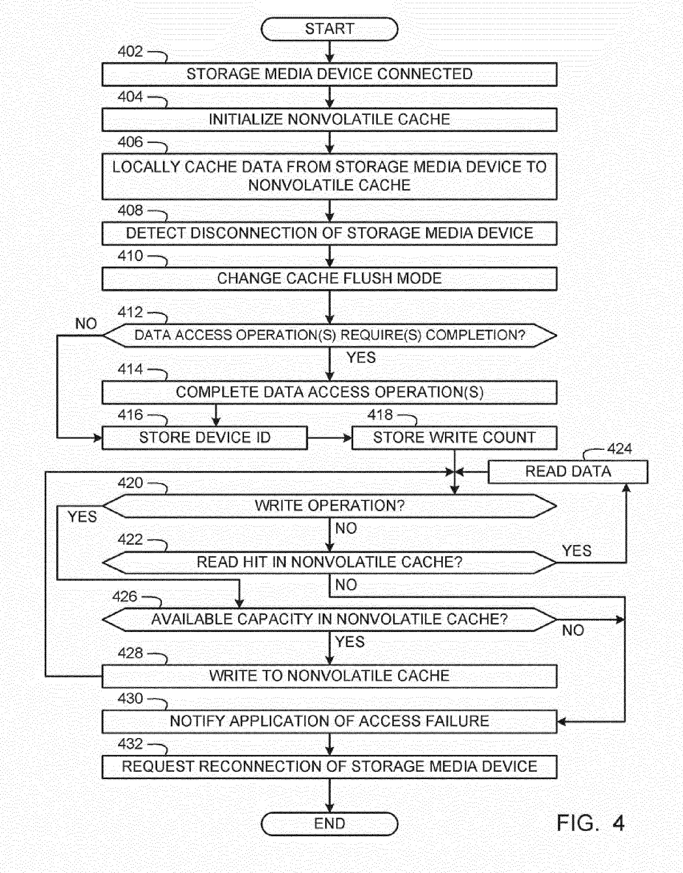

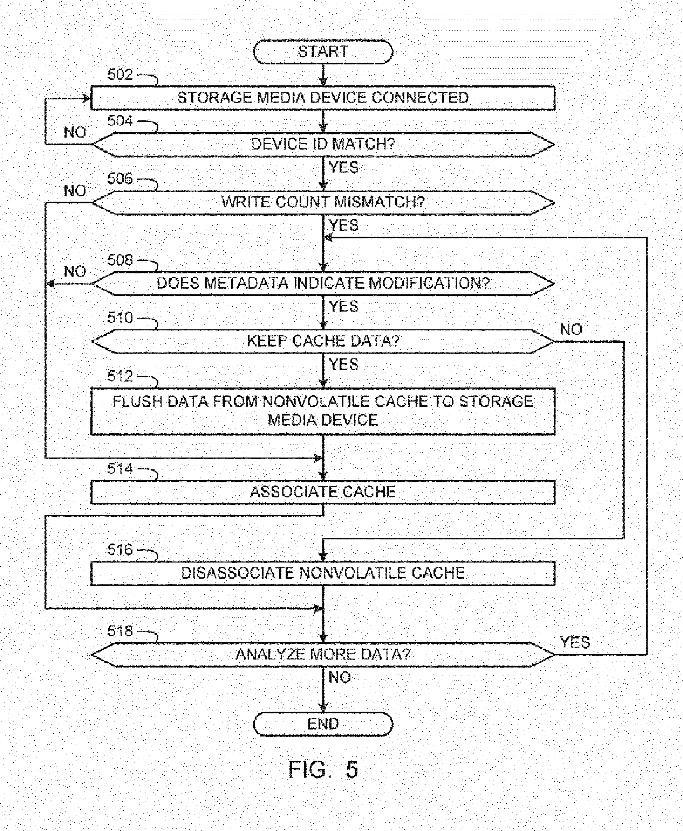

FIG. 3 is a flow diagram representative of example machine readable instructions that may be executed to implement the example nonvolatile cache manager 118 of FIGS. 1A, 1B, and 2 to manage the intermittently connectable storage media device 106 during an example disconnection phase 302 and an example reconnection phase 304 of the intermittently connectable storage media device 106 in accordance with the teachings of this disclosure. In the illustrated example, the disconnection phase 302 includes operations corresponding to initializing the nonvolatile cache 122 (FIGS. 1A and 1B) and maintain the nonvolatile cache 122 upon removal or disconnection of the intermittently connectable storage media device 106 from the example host system 100 (FIGS. 1A and 1B). The example reconnection phase 304 includes operations corresponding to disassociating and/or associating portions of the nonvolatile cache 122 with the intermittently connectable storage media device 106 after the intermittently connectable storage media device 106 is reconnected to the host system 100. Further example operations that may be performed during the connection phase 302 are described below in connection with FIG. 4. In addition, further example operations that may be performed during the reconnection phase 304 are described below in connection with FIG. 5.

The example process of FIG. 3 begins at the example disconnect phase 302. Initially, at block 306, the example cache analyzer 204 (FIG. 2) initializes the nonvolatile cache 122 corresponding to the intermittently connectable storage media device 106 connected to the host system 100. The example connection status detector 202 detects the intermittently connectable storage media device 106 being disconnected from the host system (block 308). The example cache flush manager 206 changes a cache flush mode associated with the nonvolatile cache 122 from a cache write through mode to a cache write back mode (block 310). The cache access manager 208 maintains the nonvolatile cache 122 in the nonvolatile storage 104 after the intermittently connectable storage media device 106 is disconnected (block 312). The example cache access manager 208 allows servicing of a subsequent data access request based on the nonvolatile cache 122 (block 314). For example, in response to a data access request intended to write or read data in the intermittently connectable storage media device 106, the cache access manager 208 causes the processor 102 and/or the I/O hub 110 to perform a corresponding data access operation using the nonvolatile cache 122.

Subsequently, during the example reconnection phase 304, the example comparator 316 determines that the intermittently connectable storage media device 106 is reconnected to the host system 100 (block 316). For example, the comparator 316 confirms a match between the device ID (ID_{ICM}) 134 of the intermittently connectable storage media device 106 and the device ID (ID_{ICM}) 134 stored in the host system 100. The example cache access manager 208 disassociates one or more portions of the nonvolatile cache 122 corresponding to modified data (e.g., one or more blocks of data or one or more files) on the intermittently connectable storage media device 106 (block 318). For example, the cache access manager 208 disassociates one or more portions of the nonvolatile cache 122 from the intermittently connectable storage media device 106 based on the portion(s) of the nonvolatile cache 122 corresponding to data (e.g., one or more blocks of data or one or more files) modified on the intermittently connectable storage media device 106 relative to the portion(s) of the nonvolatile cache 122. The example cache access manager 208 associates one or more portions of the nonvolatile cache 122 corresponding to data not modified on the intermittently connectable storage media device 106 (block 320). For example, the cache access manager 208 associates one or more portions of the nonvolatile cache 122 with the intermittently connectable storage media device 106 based on the portion(s) of the nonvolatile cache 122 corresponding to data not modified on the intermittently connectable storage media device 106 relative to the portion(s) of the nonvolatile cache 122. The example process of FIG. 3 then ends.

Although the example flow diagram of FIG. 3 is described as a process having two phases (the example disconnect phase 302 and the example reconnect phase 304), the example of FIG. 3 may be implemented as two separate processes. In such examples, the disconnect phase 302 may implement as a first process separate from a second process used to implement the reconnection phase 304. In some examples, one or more example operations of FIG. 4 may be additionally or alternatively used to implement an example process for the disconnect phase 302, and one or more example operations of FIG. 5 may be additionally or alternatively used to implement an example process for the reconnection phase 304.

FIG. 4 is a flow diagram representative of example machine readable instructions that may be executed to implement the example nonvolatile cache manager 118 of FIGS. 1A, 1B, and 2 to initialize and maintain the nonvolatile cache 122 of FIGS. 1A and 1B in association with managing the intermittently connectable storage media device 106 of FIGS. 1A and 1B. The example process of FIG. 4 begins at block 402 at which the example connection status detector 202 (FIG. 2) detects that the intermittently connectable storage media device 106 (FIGS. 1A and 1B) has been connected to the host system 100 (FIGS. 1A and 1B). The example cache analyzer 204 (FIG. 2) initializes the nonvolatile cache 122 of FIGS. 1A and 1B (block 404). For example, the cache analyzer 204 allocates an amount of memory in the nonvolatile storage 104 of FIGS. 1A and 1B to create the nonvolatile cache 122. The example cache access manager 208 (FIG. 2) locally caches data from the intermittently connectable storage media device 106 to the nonvolatile cache 122 (block 406). For example, during ongoing data accesses from the host system 100 to the intermittently connectable storage media device 106, the cache access manager 208 caches data read from the intermittently connectable storage media device 106 to the nonvolatile cache 122. The example connection status detector 202 then detects disconnection of the intermittently connectable storage media device 106 from the host system 100 (block 408). In some examples, the disconnection detection at block 408 involves the connection status detector 202 detecting an imminent disconnecting of the intermittently connectable storage media device 106 such that the host system 100 has sufficient time to perform a limited number of accesses to the intermittently connectable storage media device 106 before the intermittently connectable storage media device 106 is completely disconnected from the host system 100. For example, a circuit or mechanical switch generates a signal that the intermittently connectable storage media device 106 is about to be physically disconnected from the host system 100, or a wireless interface provides a notification of an imminent wireless disconnection with the intermittently connectable storage media device 106, or an operating system of the host system 100 provides a notification via a registered software callback to indicate imminent disconnection of the intermittently connectable storage media device 106. In other examples, disconnection detected at block 408 is a detection that the intermittently connectable storage media device 106 has already been disconnected from the host system 100.

After the unmounting detection, the example cache flush manager 206 (FIG. 2) changes the cache flush mode associated with the nonvolatile cache 122 from a cache write through mode to a cache write back mode (block 410). The example cache access manager 208 determines whether there any data access operations that require completion (block 412). For example, the cache access manager 208 may identify any data accesses corresponding to the intermittently connectable storage media device 106 (e.g., intended to access the intermittently connectable storage media device 106) that are currently being processed (e.g., that are in-progress or in-flight). If the example cache access manager 208 identifies one or more data access operations, at block 410, requiring completion, the cache access manager 208 notifies the example processor 102 and/or the example I/O hub 110 (FIGS. 1A and 1B) to complete the data access operation(s) (block 414).

If the cache access manager determines at block 412 that there are no data access operations requiring completion, control advances to block 416. At block 416, the example cache access manager 208 stores the media device ID (ID_{ICM}) 134. In addition, the example cache access manager 208 stores the local write count (CNT_{L}) 142 (block 418) as a copy of the write count (CNT_{ICM}) 138 of the intermittently connectable storage media device 106. In some examples, the cache access manager 208 copies the media device ID (ID_{ICM}) 134 and the write count (CNT_{ICM}) 138 from the intermittently connectable storage media device 106 immediately after the connection status detector 202 detects an imminent disconnection of the intermittently connectable storage media device 106 (e.g., a circuit or mechanical switch generates a signal that the intermittently connectable storage media device 106 is about to be disconnected from the host system 100, or disconnection is identified based on a network signal or network connection loss). In this manner, by performing the copy operation immediately upon an imminent unmounting detection, the cache access manager 208 has sufficient time to read the media device ID (ID_{ICM}) 134 and the write count (CNT_{ICM}) 138 from the intermittently connectable storage media device 106 before complete disconnection. In yet other examples, the cache access manager 208 reads the device ID (ID_{ICM}) 134 and the write count (CNT_{ICM}) 138 from the intermittently connectable storage media device 106 at block 404 during initialization of the nonvolatile cache 122 and stores the values in the host system 100 as the device ID (ID_{ICM}) 134 and the local write count (CNT_{L}) 142. In such examples, the cache access manager 208, updates local write count (CNT_{L}) 142 each time a write is performed to the intermittently connectable storage media device 106 and the write count (CNT_{ICM}) 138 is incremented in the intermittently connectable storage media device 106.

In the illustrated example, since the contents of the nonvolatile cache 122 are maintained or preserved after the intermittently connectable storage media device 106 is disconnected from the host system 100, the nonvolatile cache manager 118 allows processes to continue to issue data access requests corresponding to the intermittently connectable storage media device 106 (e.g., read requests intended to read data from one or more memory addresses of the intermittently connectable storage media device 106, write requests intended to write data to one or more memory addresses of the intermittently connectable storage media device 106, etc.). In this manner, the nonvolatile cache manager 118 may continue to allow such data access requests to be serviced until the nonvolatile cache 122 is full and/or until a data access request corresponds to data that is not locally cached in the nonvolatile cache 122 (e.g., the data would need to be accessed in the intermittently connectable storage media device 106). In the illustrated example, upon receiving a subsequent data access request corresponding to the intermittently connectable storage media device 106, the example cache manager 118 determines whether the data access request is a write operation (block 420). If the data access request is not a write operation, the cache access manager 208 handles the data access request as a read operation and determines whether the requested data causes a read hit in the nonvolatile cache 122 (block 422). In the illustrated example, if the requested data is locally cached in the nonvolatile cache 122 (e.g., a read hit), the cache access manager 208 cause the data to be read from the nonvolatile cache 122 (block 424). The example process of FIG. 4 then awaits a subsequent data access request.

If the example cache access manager 208 determines at block 420 that the data access request is a write operation, the cache access manager 208 determines whether there is sufficient available capacity in the nonvolatile cache 122 to service the write operation (block 426). If there is sufficient available capacity in the nonvolatile cache 122 to store data from the write operation, the cache access manager 208 allows the write operation to write data to the nonvolatile cache 122 (block 428). For example, the cache access manager 208 allows or notifies the I/O hub 110 to perform the write operation on the nonvolatile cache 122. The example process of FIG. 4 then awaits a subsequent data access request.

In the illustrated example of FIG. 4, when the cache access manager 208 determines a read miss (e.g., requested data is not stored in the nonvolatile cache 122) at block 422 and/or determines that there is not sufficient available capacity in the nonvolatile cache 122 at block 426, control advances to block 430 at which the cache access manager 208 notifies an application of an access failure. In the illustrated example, the access failure causes the host system 102 to request reconnection of the intermittently connectable storage media device 106 (block 432). For example, the host system 100 may display a message prompting the user to reconnect the intermittently connectable storage media device 106 to process the requested data access operation. The example process of FIG. 4 then ends.

FIG. 5 is a flow diagram representative of example machine readable instructions that may be executed to implement the nonvolatile cache manager 118 of FIGS. 1A, 1B, and 2 to handle data associations and/or disassociations between the nonvolatile cache 122 of FIGS. 1A and 1B and the intermittently connectable storage media device 106 of FIGS. 1A and 1B when the intermittently connectable storage media device 106 is reconnected to the host system 100 of FIGS. 1A and 1B. The example process of FIG. 5 begins at block 502 at which the example connection status detector 202 (FIG. 2) determines that a intermittently connectable storage media device has been connected (block 502) to the host system 100. The example comparator 210 (FIG. 2) determines whether the device ID (ID_{ICM}) 132 (FIGS. 1A and 1B) of the intermittently connectable storage media device 106 matches the device ID (ID_{ICM}) 134 (FIGS. 1A and 1B) stored in the host system 100 (block 504). If the device IDs do not match at block 504, the host system 100 does not have an existing nonvolatile cache for the connected intermittently connectable storage media device, and control returns to block 502 to await connection of another intermittently connectable storage media device. However, if the device IDs match at block 504, the host system 100 has an existing nonvolatile cache (e.g., the nonvolatile cache 122 of FIGS. 1A and 1B) for the connected intermittently connectable storage media device (e.g., the intermittently connectable storage media device 106), and control advances to block 506. At block 506, the example comparator 210 determines whether there is a mismatch between the local write count (CNT_{L}) 142 and the intermittently connectable storage media write count (CNT_{ICM}) 138 of FIGS. 1A and 1B. For example, comparator 210 may determine that there is a mismatch between the local write count (CNT_{L}) 142 and the intermittently connectable storage media write count (CNT_{ICM}) 138 if an absolute difference between the local write count (CNT_{L}) 142 and the intermittently connectable storage media write count (CNT_{ICM}) 138 is greater than zero. If there is no mismatch (e.g., there is a match) between the local write count (CNT_{L}) 142 and the intermittently connectable storage media write count (CNT_{ICM}) 138, the example cache access manager 208 associates the cache data in the nonvolatile cache 122 with the intermittently connectable storage media device 106 (block 514).

If the comparator 210 determines at block 506 that there is a write count mismatch, the example metadata analyzer 212 (FIG. 2) analyzes metadata of cache data in the nonvolatile cache 122 and metadata of corresponding non-cache data in the intermittently connectable storage media device 106 to determine whether modification of the data has occurred at either location (block 508). For example, the metadata analyzer 212 may compare date/time stamps of cache block(s) of data or files in the nonvolatile cache 122 to date/time stamps of corresponding non-cache block(s) of data or files in the intermittently connectable storage media device 106. In this manner, if the metadata analyzer 212 identifies a mismatch between date/time stamps of corresponding cache and non-cache block(s) of data or files, the metadata analyzer 212 determines that the corresponding cache and non-cache block(s) of data or files are different. Otherwise, if the metadata analyzer 212 identifies that there is no mismatch between date/time stamps of corresponding cache and non-cache block(s) of data or files (e.g., the intermittently connectable storage media write count (CNT_{ICM}) 138 was incremented by another host system based on a modification of non-cache data in the intermittently connectable storage media device 106 that does not correspond to cache data in the nonvolatile cache 122), the metadata analyzer 212 determines that the corresponding cache and non-cache block(s) of data or files are the same.

If the metadata analyzer 212 determines at block 508 that cache data and corresponding non-cache data were not modified, the example cache access manager 208 associates the cache data in the nonvolatile cache 122 with the intermittently connectable storage media device 106 (block 514). If the metadata analyzer 212 determines at block 508 that cache data and/or corresponding non-cache data were modified, the example cache access manager 208 determines whether to keep the cache data in the nonvolatile cache 122 (block 510). For example, the host system 100 may prompt a user to select which one of the cache data in the nonvolatile cache 122 or the non-cache data in the intermittently connectable storage media device 106 to keep.

If the cache access manger 208 determines at block 510 to keep the cache data in the nonvolatile cache 122 (e.g., and discard, invalidate, and/or overwrite the non-cache data in the intermittently connectable storage media device 106), the example cache flush manager 206 flushes data from the cache data in the nonvolatile cache 122 to the intermittently connectable storage media device 106 (block 512). For example, the cache flush manager 206 flushes dirty writes from the nonvolatile cache 122 to the intermittently connectable storage media device 106. In the illustrated example, the cache flush from the nonvolatile cache 122 may result in overwriting a portion of a corresponding non-cache data in the intermittently connectable storage media device 106 or the entirety of the corresponding non-cache data. The example cache access manager 208 then associates the cache data in the nonvolatile cache 122 with the intermittently connectable storage media device 106 (block 514).

If the cache access manager determines at block 510 to keep the non-cache data in the intermittently connectable storage media device 106 (e.g., and discard, invalidate, and/or overwrite the cache data in the nonvolatile cache 122), control advances to block 516 at which the example cache access manager 208 disassociates the cache data in the nonvolatile cache 122 from the corresponding modified non-cache data in the intermittently connectable storage media device 106. For example, the cache access manager 208 may invalidate and discard the cache data in the nonvolatile cache 122 so that any subsequent accesses of the data are performed using the non-cache data in the intermittently connectable storage media device 106. The example nonvolatile cache manager 118 may perform the operations of blocks 508, 510, 512, 514, 516 a number of times to process any number of cache lines of data in the nonvolatile cache 122 and corresponding non-cache data stored in the intermittently connectable storage media device 106. In the illustrated example, the cache access manager 208 determines whether there is more data to analyze (block 518). If there is more data to analyze, control returns to block 508. Otherwise, the example process FIG. 5 ends.

FIG. 6 is a block diagram of an example processor platform 600 capable of executing the instructions of FIGS. 3-5 to implement the nonvolatile cache manager 118 of FIGS. 1A, 1B, and 2. The processor platform 600 can be, for example, a server, a personal computer, a mobile device (e.g., a cell phone, a smart phone, a tablet such as an iPad® tablet), a personal digital assistant (PDA), an Internet appliance, a DVD player, a CD player, a digital video recorder, a Blu-ray player, a gaming console, a personal video recorder, a set top box, or any other type of computing device.

The processor platform 600 of the illustrated example includes one or more processors 612. The processor(s) 612 may be used to implement the processor(s) 102 of FIGS. 1A and 1B. The processor(s) 612 of the illustrated example is hardware. For example, the processor(s) 612 can be implemented by one or more integrated circuits, logic circuits, microprocessors or controllers from any desired family or manufacturer. The hardware processor may be a semiconductor based (e.g., silicon based) device. In this example, the processor(s) 612 implement(s) example connection status detector 202, the example cache initializer 204, the example cache flush manager 206, the example cache access manager 208, the example comparator 210, and the example metadata analyzer 212 of FIG. 2.

The processor 612 of the illustrated example includes a local memory 613 (e.g., a cache). The processor 612 of the illustrated example is in communication with a main memory including a volatile memory 614 and a nonvolatile memory 616 via a bus 618. In the illustrated example, the volatile memory 614 may be used to implement the volatile memory 108 of FIGS. 1A and 1B, and the nonvolatile memory 616 may be used to implement the nonvolatile storage 104 of FIGS. 1A and 1B. The volatile memory 614 may be implemented by Synchronous Dynamic Random Access Memory (SDRAM), Dynamic Random Access Memory (DRAM), RAMBUS Dynamic Random Access Memory (RDRAM) and/or any other type of random access memory device. The nonvolatile memory 616 may be implemented by flash memory and/or any other desired type of memory device. Access to the main memory 614, 616 is controlled by a memory controller. Some memory controllers may be implemented in the processor 612 such as a memory controller used to access the volatile memory 108 of FIGS. 1A and 1B and/or a memory controller used to access the nonvolatile storage 104 as shown in FIG. 1B. Other memory controllers are external to the processor 612 such as the example I/O hub 110 used to access the nonvolatile storage 104 as shown in FIG. 1A.

The processor platform 600 of the illustrated example also includes an interface circuit 620. The interface circuit 620 may be implemented by any type of interface standard, such as an Ethernet interface, a universal serial bus (USB), and/or a PCI express interface.

In the illustrated example, one or more input devices 622 are connected to the interface circuit 620. The input device(s) 622 permit(s) a user to enter data and/or commands into the processor 612. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 624 are also connected to the interface circuit 620 of the illustrated example. The output devices 624 can be implemented, for example, by display devices (e.g., a light emitting diode (LED), an organic light emitting diode (OLED), a liquid crystal display, a cathode ray tube display (CRT), a touchscreen, a tactile output device, a printer and/or speakers). The interface circuit 620 of the illustrated example, thus, typically includes a graphics driver card, a graphics driver chip and/or a graphics driver processor.

The interface circuit 620 of the illustrated example also includes a communication device such as a transmitter, a receiver, a transceiver, a modem and/or network interface card to facilitate exchange of data with external machines (e.g., computing devices of any kind) via a network 626 (e.g., an Ethernet connection, a digital subscriber line (DSL), a telephone line, coaxial cable, a cellular telephone system, etc.).

The processor platform 600 of the illustrated example also includes one or more mass storage devices 628 for storing software and/or data. Examples of such mass storage devices 628 include floppy disk drives, hard drive disks, compact disk drives, Blu-ray disk drives, RAID systems, and digital versatile disk (DVD) drives.

Coded instructions 632 used to implement the machine readable instructions of FIGS. 3-5 may be stored in the mass storage device 628, in the volatile memory 614, in the nonvolatile memory 616, and/or on a removable tangible computer readable storage medium such as a CD or DVD.

Examples disclosed herein are useful to improve performance of data access corresponding to intermittently connectable media storage devices and to improve data consistency between local nonvolatile cache in a host system and intermittently connectable storage media devices connectable to the host system. For example, examples disclosed herein may be used to implement a nonvolatile cache on a primary/permanent nonvolatile storage device of a host system. When an intermittently connectable storage media device is removably connected to such host system, examples disclosed herein can be used to copy data from the intermittently connectable storage media device to the nonvolatile cache for fast data access from the nonvolatile cache. In addition, examples disclosed herein provide cache management techniques to manage data caching in the nonvolatile cache and to preserve data consistency between changes made to data in the nonvolatile cache and data in the intermittently connectable storage media even when such intermittently connectable storage media is abruptly or unexpectedly disconnected from the host system.

The following pertain to further examples disclosed herein.
Example 1 is an apparatus to manage intermittently connectable storage media. The apparatus of Example 1 includes a cache initializer to initialize a nonvolatile cache corresponding to an intermittently connectable storage media device connected to a host system; a cache flush manager to change a cache flush mode associated with the nonvolatile cache from a cache write through mode to a cache write back mode based on the intermittently connectable storage media device being disconnected from the host system; a cache access manager to: maintain the nonvolatile cache after the intermittently connectable storage media device is disconnected; and in response to a data access request corresponding to the intermittently connectable storage media device, perform a corresponding data access operation using the nonvolatile cache.
In Example 2, the subject matter of Example 1 can optionally include that the cache initializer is to initialize the nonvolatile cache by allocating the nonvolatile cache in nonvolatile storage fixedly mounted to the host system.
In Example 3, the subject matter of any one of Examples 1-2 can optionally include that after the intermittently connectable storage media device is reconnected to the host system, the cache access manager is further to: disassociate a first portion of the nonvolatile cache from the intermittently connectable storage media device based on the first portion of the nonvolatile cache corresponding to a data modified on the intermittently connectable storage media device relative to the first portion of the nonvolatile cache; and associate a second portion of the nonvolatile cache with the intermittently connectable storage media device based on the second portion of the nonvolatile cache corresponding to data not modified on the intermittently connectable storage media device relative to the second portion of the nonvolatile cache.
In Example 4, the subject matter of any one of Examples 1-3 can optionally include a comparator to determine that the intermittently connectable storage media device is reconnected to the host system based on a match between a first device identifier in the host system and a second device identifier in the intermittently connectable storage media device.
In Example 5, the subject matter of any one of Examples 1-4 can optionally include a comparator to determine that the first portion of the nonvolatile cache corresponds to the data modified on the intermittently connectable storage media device by: determining a mismatch between a first write count stored on the host system and a second write count of the intermittently connectable storage media device; and determining a mismatch between first file metadata corresponding to the first portion of the nonvolatile cache and second file metadata corresponding to the data modified on the intermittently connectable storage media device.
In Example 6, the subject matter of any one of Examples 1-5 can optionally include that the associating of the second portions of the nonvolatile cache with the intermittently connectable storage media device includes flushing dirty writes from the second portions of the nonvolatile cache to the intermittently connectable storage media device.
In Example 7, the subject matter of any one of Examples 1-6 can optionally include that the intermittently connectable storage media device is one of a removable memory card, a universal serial bus memory device, or a network attached storage device.
In Example 8, the subject matter of any one of Examples 1-7 can optionally include a network interface; and one or more processors in communication with the network interface, the one or more processors including the cache initializer, the cache flush manager, and the cache access manager.
Example 9 is at least one article of manufacture comprising machine readable instructions that, when executed, cause a processor to at least: initialize a nonvolatile cache corresponding to an intermittently connectable storage media device connected to a host system; based on the intermittently connectable storage media device being disconnected from the host system: change a cache flush mode associated with the nonvolatile cache from a cache write through mode to a cache write back mode; maintain the nonvolatile cache after the intermittently connectable storage media device is disconnected; and in response to a data access request corresponding to the intermittently connectable storage media device, perform a corresponding data access operation using the nonvolatile cache.
In Example 10, the subject matter of Example 9 can optionally include that the instructions are to initialize the nonvolatile cache by allocating the nonvolatile cache in nonvolatile storage fixedly mounted to the host system.
In Example 11, the subject matter of any one of Examples 9-10 can optionally include that the instructions are further to cause the processor to, after the intermittently connectable storage media device is reconnected to the host system: disassociate a first portion of the nonvolatile cache from the intermittently connectable storage media device based on the first portion of the nonvolatile cache corresponding to a data modified on the intermittently connectable storage media device relative to the first portion of the nonvolatile cache; and associate a second portion of the nonvolatile cache with the intermittently connectable storage media device based on the second portion of the nonvolatile cache corresponding to data not modified on the intermittently connectable storage media device relative to the second portion of the nonvolatile cache.
In Example 12, the subject matter of any one of Examples 9-11 can optionally include that the instructions are further to cause the processor to determine that the intermittently connectable storage media device is reconnected to the host system is based on a match between a first device identifier in the host system and a second device identifier in the intermittently connectable storage media device.
In Example 13, the subject matter of any one of Examples 9-12 can optionally include that the instructions are further to cause the processor to determine that the first portion of the nonvolatile cache corresponds to the data modified on the intermittently connectable storage media device by: determining a mismatch between a first write count stored on the host system and a second write count of the intermittently connectable storage media device; and determining a mismatch between first file metadata corresponding to the first portion of the nonvolatile cache and second file metadata corresponding to the data modified on the intermittently connectable storage media device.
In Example 14, the subject matter of any one of Examples 9-13 can optionally include that the instructions are to cause the processor to associate the second portions of the nonvolatile cache with the intermittently connectable storage media device by flushing dirty writes from the second portions of the nonvolatile cache to the intermittently connectable storage media device.
In Example 15, the subject matter of any one of Examples 9-14 can optionally include that the intermittently connectable storage media device is one of a removable memory card, a universal serial bus memory device, or a network attached storage device.
Example 16 is a method to manage intermittently connectable storage media. The method of Example 16 includes initializing a nonvolatile cache corresponding to an intermittently connectable storage media device connected to a host system; based on the intermittently connectable storage media device being disconnected from the host system: changing a cache flush mode associated with the nonvolatile cache from a cache write through mode to a cache write back mode; maintaining the nonvolatile cache after the intermittently connectable storage media device is disconnected; and in response to a data access request corresponding to the intermittently connectable storage media device, performing a corresponding data access operation using the nonvolatile cache.
In Example 17, the subject matter of Example 16 can optionally include that the initializing of the nonvolatile cache includes allocating the nonvolatile cache in nonvolatile storage fixedly mounted to the host system.
In Example 18, the subject matter of any one of Examples 16-17 can optionally include, after the intermittently connectable storage media device is reconnected to the host system: disassociating a first portion of the nonvolatile cache from the intermittently connectable storage media device based on the first portion of the nonvolatile cache corresponding to a data modified on the intermittently connectable storage media device relative to the first portion of the nonvolatile cache; and associating a second portion of the nonvolatile cache with the intermittently connectable storage media device based on the second portion of the nonvolatile cache corresponding to data not modified on the intermittently connectable storage media device relative to the second portion of the nonvolatile cache.
In Example 19, the subject matter of any one of Examples 16-18 can optionally include that the determining that the intermittently connectable storage media device is reconnected to the host system is based on a match between a first device identifier in the host system and a second device identifier in the intermittently connectable storage media device.
In Example 20, the subject matter of any one of Examples 16-19 can optionally include determining that the first portion of the nonvolatile cache corresponds to the data modified on the intermittently connectable storage media device by: determining a mismatch between a first write count stored on the host system and a second write count of the intermittently connectable storage media device; and determining a mismatch between first file metadata corresponding to the first portion of the nonvolatile cache and second file metadata corresponding to the data modified on the intermittently connectable storage media device.
In Example 21, the subject matter of any one of Examples 16-20 can optionally include that the associating of the second portions of the nonvolatile cache with the intermittently connectable storage media device includes flushing dirty writes from the second portions of the nonvolatile cache to the intermittently connectable storage media device.
In Example 22, the subject matter of any one of Examples 16-21 can optionally include that the intermittently connectable storage media device is one of a removable memory card, a universal serial bus memory device, or a network attached storage device.
Example 23 is an apparatus to manage intermittently connectable storage media. The apparatus of Example 23 includes means for initializing nonvolatile cache to initialize a nonvolatile cache corresponding to an intermittently connectable storage media device connected to a host system; means for flushing cached data to change a cache flush mode associated with the nonvolatile cache from a cache write through mode to a cache write back mode based on the intermittently connectable storage media device being disconnected from the host system; means for managing cache accesses to: maintain the nonvolatile cache after the intermittently connectable storage media device is disconnected; and in response to a data access request corresponding to the intermittently connectable storage media device, perform a corresponding data access operation using the nonvolatile cache.
In Example 24, the subject matter of example 23 can optionally include that the means for initializing nonvolatile cache is to initialize the nonvolatile cache by allocating the nonvolatile cache in nonvolatile storage fixedly mounted to the host system.
In Example 25, the subject matter of any one of examples 23-24 can optionally include that, after the intermittently connectable storage media device is reconnected to the host system, the means for managing cache accesses is further to: disassociate a first portion of the nonvolatile cache from the intermittently connectable storage media device based on the first portion of the nonvolatile cache corresponding to a data modified on the intermittently connectable storage media device relative to the first portion of the nonvolatile cache; and associate a second portion of the nonvolatile cache with the intermittently connectable storage media device based on the second portion of the nonvolatile cache corresponding to data not modified on the intermittently connectable storage media device relative to the second portion of the nonvolatile cache.
In Example 26, the subject matter of any one of examples 23-25 can optionally include means for comparing to determine that the intermittently connectable storage media device is reconnected to the host system based on a match between a first device identifier in the host system and a second device identifier in the intermittently connectable storage media device.
In Example 27, the subject matter of any one of examples 23-26 can optionally include means for comparing to determine that the first portion of the nonvolatile cache corresponds to the data modified on the intermittently connectable storage media device by: determining a mismatch between a first write count stored on the host system and a second write count of the intermittently connectable storage media device; and determining a mismatch between first file metadata corresponding to the first portion of the nonvolatile cache and second file metadata corresponding to the data modified on the intermittently connectable storage media device.
In Example 28, the subject matter of any one of examples 23-27 can optionally include that the associating of the second portions of the nonvolatile cache with the intermittently connectable storage media device includes flushing dirty writes from the second portions of the nonvolatile cache to the intermittently connectable storage media device.
In Example 29, the subject matter of any one of examples 23-28 can optionally include that the intermittently connectable storage media device is one of a removable memory card, a universal serial bus memory device, or a network attached storage device.
In Example 30, the subject matter of any one of examples 23-29 can optionally include a network interface; and one or more processors in communication with the network interface, the one or more processors including the means for initializing nonvolatile cache, the means for flushing cached data, and the means for managing cache accesses.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus to manage intermittently connectable storage media, the apparatus comprising:
a cache initializer to initialize a nonvolatile cache corresponding to an intermittently connectable storage media device connected to a host system;
a cache flush manager to change a cache flush mode associated with the nonvolatile cache from a cache write through mode to a cache write back mode based on the intermittently connectable storage media device being disconnected from the host system;
a cache access manager to:
maintain the nonvolatile cache after the intermittently connectable storage media device is disconnected; and
in response to a data access request corresponding to the intermittently connectable storage media device, perform a corresponding data access operation using the nonvolatile cache.

2. The apparatus as defined in claim 1, wherein the cache initializer is to initialize the nonvolatile cache by allocating the nonvolatile cache in nonvolatile storage fixedly mounted to the host system.

3. The apparatus as defined in any of claims 1 and 2, wherein, after the intermittently connectable storage media device is reconnected to the host system, the cache access manager is further to:
disassociate a first portion of the nonvolatile cache from the intermittently connectable storage media device based on the first portion of the nonvolatile cache corresponding to data modified on the intermittently connectable storage media device relative to the first portion of the nonvolatile cache; and
associate a second portion of the nonvolatile cache with the intermittently connectable storage media device based on the second portion of the nonvolatile cache corresponding to data not modified on the intermittently connectable storage media device relative to the second portion of the nonvolatile cache.

4. The apparatus as defined in any of claims 1-3, further including a comparator to determine that the intermittently connectable storage media device is reconnected to the host system based on a match between a first device identifier in the host system and a second device identifier in the intermittently connectable storage media device.

5. The apparatus as defined in any of claims 1-4, further including a comparator to determine that the first portion of the nonvolatile cache corresponds to the data modified on the intermittently connectable storage media device by:
determining a mismatch between a first write count stored on the host system and a second write count of the intermittently connectable storage media device; and
determining a mismatch between first file metadata corresponding to the first portion of the nonvolatile cache and second file metadata corresponding to the data modified on the intermittently connectable storage media device.

6. The apparatus as defined in any of claims 1-5, wherein the associating of the second portions of the nonvolatile cache with the intermittently connectable storage media device includes flushing dirty writes from the second portions of the nonvolatile cache to the intermittently connectable storage media device.

7. The apparatus as defined in any of claims 1-6, wherein the intermittently connectable storage media device is one of a removable memory card, a universal serial bus memory device, or a network attached storage device.

8. The apparatus as defined in any of claims 1-7, further including:
a network interface; and
one or more processors in communication with the network interface, the one or more processors including the cache initializer, the cache flush manager, and the cache access manager.

9. A method to manage intermittently connectable storage media, the method comprising:
initializing a nonvolatile cache corresponding to an intermittently connectable storage media device connected to a host system;
based on the intermittently connectable storage media device being disconnected from the host system:
changing a cache flush mode associated with the nonvolatile cache from a cache write through mode to a cache write back mode;
maintaining the nonvolatile cache after the intermittently connectable storage media device is disconnected; and
in response to a data access request corresponding to the intermittently connectable storage media device, performing a corresponding data access operation using the nonvolatile cache.

10. The method as defined in claim 9, wherein the initializing of the nonvolatile cache includes allocating the nonvolatile cache in nonvolatile storage fixedly mounted to the host system.

11. The method as defined in any of claims 9 and 10, further including, after the intermittently connectable storage media device is reconnected to the host system:
disassociating a first portion of the nonvolatile cache from the intermittently connectable storage media device based on the first portion of the nonvolatile cache corresponding to data modified on the intermittently connectable storage media device relative to the first portion of the nonvolatile cache; and
associating a second portion of the nonvolatile cache with the intermittently connectable storage media device based on the second portion of the nonvolatile cache corresponding to data not modified on the intermittently connectable storage media device relative to the second portion of the nonvolatile cache.

12. The method as defined in any of claims 9-11, wherein the determining that the intermittently connectable storage media device is reconnected to the host system is based on a match between a first device identifier in the host system and a second device identifier in the intermittently connectable storage media device.

13. The method as defined in any of claims 9-12, further including determining that the first portion of the nonvolatile cache corresponds to the data modified on the intermittently connectable storage media device by:
determining a mismatch between a first write count stored on the host system and a second write count of the intermittently connectable storage media device; and
determining a mismatch between first file metadata corresponding to the first portion of the nonvolatile cache and second file metadata corresponding to the data modified on the intermittently connectable storage media device.

14. The method as defined in any of claims 9-13, wherein the associating of the second portions of the nonvolatile cache with the intermittently connectable storage media device includes flushing dirty writes from the second portions of the nonvolatile cache to the intermittently connectable storage media device.

15. A computer program, including instructions that, when executed, cause a machine to perform the method of any of claims 9-14.
